# FASCICULE DE BREVET EUROPEEN

(11) **EP 2 274 816 B1**
(45) Date de publication et mention de la délivrance du brevet: **30.10.2013**
(21) Numéro de dépôt: 09745955.6
(22) Date de dépôt: 16.04.2009
(51) Int. Cl.: H02K 1/20, H02K 5/20, H02K 9/06

(54) **MACHINE ELECTRIQUE A DOUBLE VENTILATION SEPAREE**
ELEKTRISCHE MASCHINE MIT SEPARATER DOPPELTER BELÜFTUNG
ELECTRIC MACHINE WITH SEPARATE DOUBLE VENTILATION

(30) Priorité: 18.04.2008 FR 0852642
(43) Date de publication de la demande: 19.01.2011
(73) Titulaire: Moteurs Leroy Somer, 16000 Angouleme (FR)
(72) Inventeur: DUTAU, Alexis, F-16000 Angouleme (FR)
(74) Mandataire: Tanty, François
(86) Numéro de dépôt international: PCT/FR2009/050712
(87) Numéro de publication internationale: WO 2009/138636

(56) Documents cités:
- DE-A1- 1 803 685
- DE-A1- 4 413 389
- DE-A1- 19 943 444
- GB-A- 348 206
- JP-A- 60 257 736
- JP-A- 61 066 543
- US-A- 1 479 636
- US-A1- 2008 019 834

## Description

La présente invention concerne les machines électriques tournantes et s'intéresse à leur refroidissement.

La publication JP 60257736 divulgue une machine comportant un carter logeant au moins partiellement un stator et un rotor , ce carter comportant des entrées d'air et des sorties d'air, le rotor entraînant deux ventilateurs disposés de manière à créer une circulation d'air depuis les entrées d'air vers les sorties d'air, les ventilateurs étant disposés de part et d'autre de la partie du rotor interagissant avec le stator, les sorties d'air étant disposées de part et d'autre des entrées d'air, un premier flux d'air circulant entre un paquet de tôles du stator et le carter de la machine et un deuxième flux d'air circulant dans l'entrefer de la machine, le stator comportant un passage à travers le paquet de tôles su stator, ce passage communiquant avec les entrées d'air, de façon à permettre à l'air de gagner l'entrefer de la machine.

La demande DE 44 13 389 décrit une machine comportant deux ventilateurs. L'air est aspiré depuis au moins une entrée située dans la région médiane de la machine. Il en est de même du brevet GB 348 206.

L'invention concerne plus particulièrement mais non exclusivement le domaine des machines électriques de forte puissance, notamment des alternateurs de puissance supérieure ou égale à 100 kW. L'invention est aussi intéressante pour les machines de plus faible puissance électrique, car les pertes aéraulique induites par les ventilateurs sont plus faibles et donc le rendement de la machine est moins impacté par la mise en place d'un second ventilateur. L'invention a pour objet une machine électrique tournante selon la revendication 1 ainsi qu'un procédé de refroidissement d'une machine électrique tournante selon la revendication 10.

Dans des exemples de mise en oeuvre de l'invention, un premier flux d'air circule entre un paquet de tôles du stator et le carter de la machine et un deuxième flux d'air circule dans l'entrefer de la machine, ces premier et deuxième flux d'air étant formés à partir d'entrées d'air respectives distinctes de la machine.

En jouant sur la taille et forme de ces entrées d'air (ces deux caractéristiques pouvant, le cas échéant, être variables sur une même machine grâce par exemple à la mise en place d'un clapet coulissant permettant d'ouvrir ou fermer les entrées d'air), il est possible de maîtriser le refroidissement de la machine en fonction des caractéristiques de fonctionnement. On peut maîtriser le débit traversant le stator et celui traversant le rotor de façon indépendante. De plus, la séparation au niveau des entrées d'air permet d'éviter une recirculation entre le circuit rotor et le circuit stator, du fait de la perturbation des écoulements induite par la rotation du rotor. Ceci est une amélioration par rapport à la demande JP 60257736.

Grâce à l'invention, la température moyenne du bobinage ainsi que celle des points chauds de la machine, généralement situés au centre dans une machine standard, sont diminuées, puisque de l'air frais peut circuler autour des parties centrales des bobinages stator et rotor.

L'invention permet ainsi d'améliorer les échanges convectifs au sein des machines tournantes électriques ouvertes.

Les ventilateurs peuvent être centrifuges, hélicocentrifuges ou autres.

L'invention est particulièrement intéressante pour une machine électrique tournante à excitatrice intégrée. En effet, la présence de l'excitatrice en bout d'arbre peut nécessiter de percer le ventilateur afin de permettre la connexion électrique entre la roue polaire et l'induit de l'excitatrice. Dans le cas d'une excitatrice intégrée au bobinage principal, un tel perçage n'est plus nécessaire. Aussi, l'invention permet un meilleur refroidissement des machines, notamment des rotors, à excitatrices intégrées. Le passage d'air peut être relativement faible lorsque les rotors sont à pôles lisses, et les pertes de charges très élevées. Le débit traversant le rotor et permettant d'assurer un bon refroidissement est obtenu par la mise en place de deux ventilateurs montés en parallèle.

Les entrées d'air peuvent être situées sensiblement à mi-distance des sorties d'air. Au moins une partie des entrées d'air peut être usinée dans le carter.

L'air peut circuler dans au moins un canal ménagé entre le paquet de tôles du stator et le carter. Ce canal peut être formé au moins partiellement entre des ailettes du paquet de tôles, par exemple. La dimension radiale du canal est par exemple comprise entre 2 et 100 mm. L'air peut notamment circuler tout autour du paquet de tôles, sur 360° autour de l'axe de rotation du rotor.

La machine comporte deux collerettes ménageant entre elles au moins une entrée d'air permettant à l'air extérieur d'être aspiré vers l'entrefer de la machine, par la dépression créée par les ventilateurs.

Cela permet de minimiser le risque de recirculation d'air entre les entrées et les sorties de la machine.

Les collerettes peuvent être solidaires du paquet de tôles statoriques. Le stator peut comporter au moins un passage à travers le paquet de tôles du stator, de façon à permettre à l'air de gagner l'entrefer de la machine et de circuler dans des canaux interpolaires du rotor, le cas échéant. L'espacement entre les collerettes est par exemple compris entre 2 et 150 mm.

Le carter peut comporter au moins une ouverture permettant à l'air d'être aspiré dans le ou les canaux existant entre le paquet de tôles statoriques et le carter.

Le carter peut notamment comporter une pluralité de telles ouvertures, qui peuvent être par exemple équiréparties angulairement.

Les ouvertures sont par exemple formées par usinage du carter, et se présentent par exemple sous la forme d'une succession d'encoches fermées d'un côté par l'une des collerettes précitées.

La section offerte au passage de l'air gagnant la machine entre les collerettes est par exemple comprise entre 20 et 90 %, mieux entre 60 et 80 % de la section totale des ouvertures définies par les encoches.

Les ventilateurs peuvent être agencés pour amener l'air ayant circulé entre le paquet de tôles statoriques et le carter à rejoindre celui ayant circulé dans l'entrefer, avant de gagner les pales du ventilateur.

Les deux ventilateurs peuvent être identiques ou différents, notamment lorsque les pales sont inclinées.

Les ventilateurs peuvent comporter chacun une première lèvre fermant un espace situé entre le voile amont du ventilateur et le carter afin de former un «plan de joint», ce qui évite les recirculations du fluide de refroidissement.

Chaque ventilateur peut comporter également une deuxième lèvre faisant saillie vers le ventilateur opposé et venant en recouvrement au moins partiel des têtes de bobines du stator.

Les première et deuxième lèvres peuvent être annulaires et continues angulairement, chacune ayant par exemple un bord libre situé dans un plan perpendiculaire à l'axe de rotation du rotor.

Le rotor peut être bobiné.

Les premier et deuxième flux d'air sont formés à partir d'entrées d'air respectives distinctes de la machine.

Le premier flux d'air peut être amené à contourner des têtes de bobines du stator avant de rejoindre le deuxième flux d'air. Le deuxième flux d'air peut encore rester indépendant du premier.

L'invention pourra être mieux comprise à la lecture de la description détaillée qui va suivre, d'un exemple de mise en oeuvre non limitatif de celle-ci, et à l'examen du dessin annexé, sur lequel :
- la figure 1 représente de manière schématique, de côté, une machine réalisée conformément à l'invention,
- la figure 2 est une coupe longitudinale, partielle et schématique, de la machine de la figure 1,
- la figure 3 représente la machine de la figure 1, en perspective,
- la figure 4 représente un détail de réalisation,

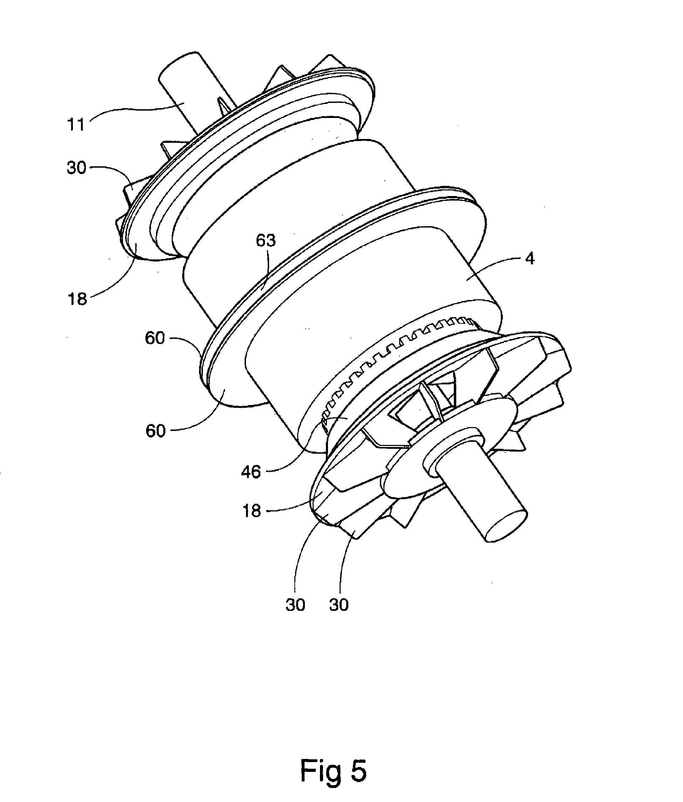

- la figure 5 représente de manière schématique la machine de la figure 1, après enlèvement du carter, et
- la figure 6 représente de manière schématique, en perspective, le rotor.

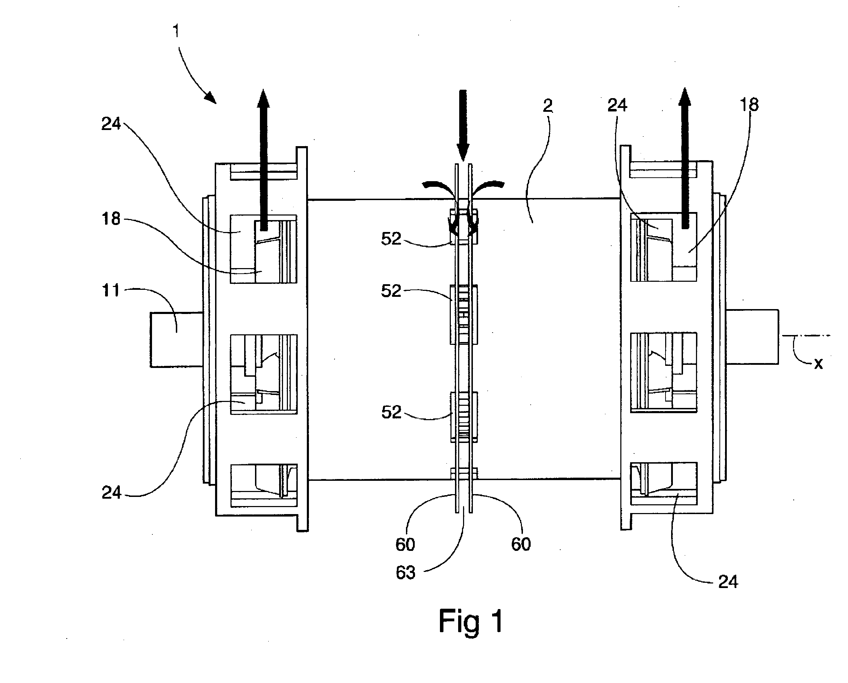

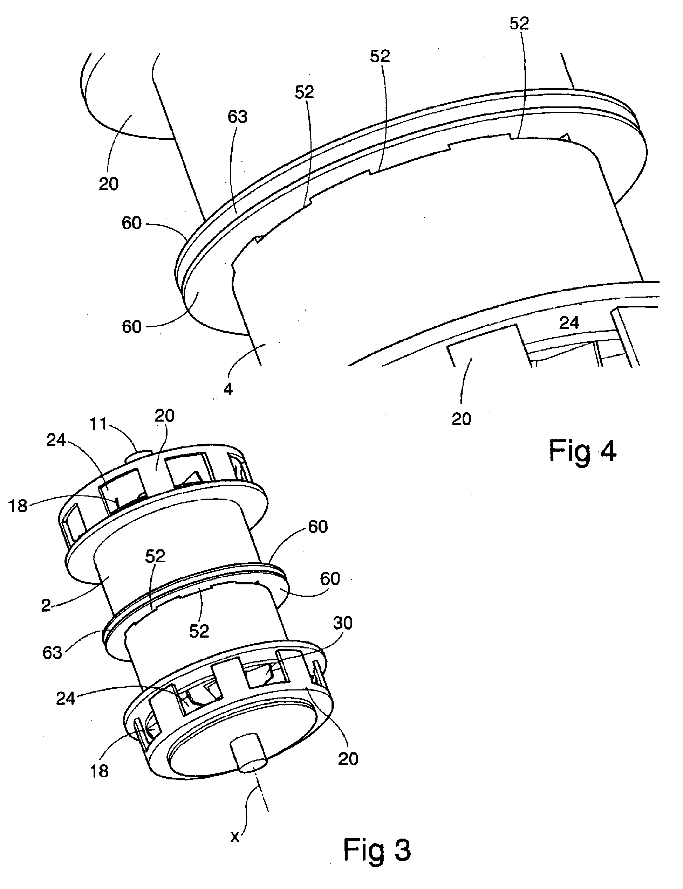

La machine 1 représentée sur les figures 1 à 3 comporte un carter 2 duquel est solidaire un stator 3 comportant un paquet de tôles statoriques magnétiques 4 et des enroulements 5.

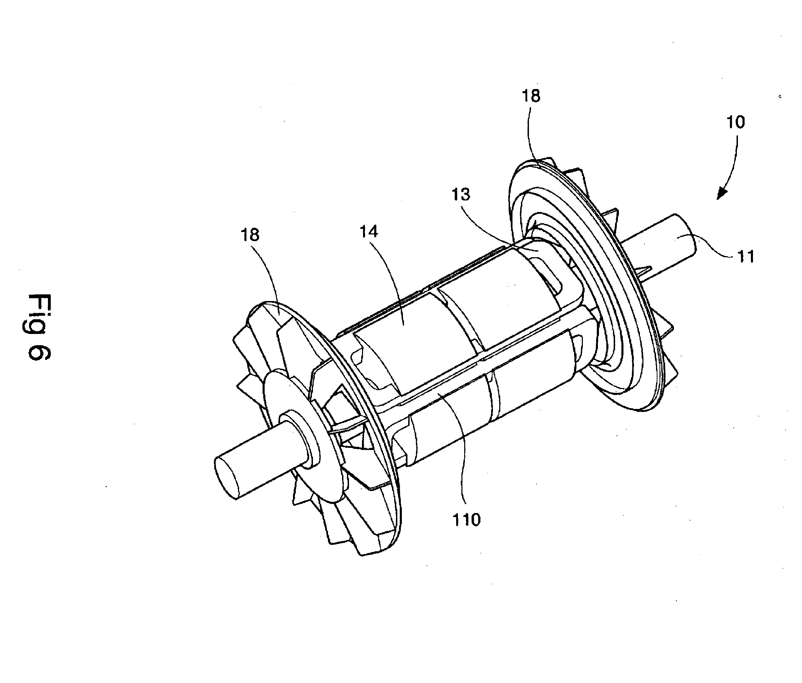

La machine 1 comporte également un rotor 10 qui a été représenté isolément à la figure 6.

Le rotor 10 comporte un arbre 11 duquel sont solidaires des tôles rotoriques 14, des enroulements 13, ainsi que deux ventilateurs 18 disposés de part et d'autre de ces enroulements 13.

Le rotor 10 peut comporter des canaux interpolaires 110.

Les ventilateurs 18 tournent au niveau de flasques d'extrémité 20 de la machine, pourvus d'ouvertures 24 pour la sortie de l'air. Ces flasques 20 peuvent supporter des ensembles de roulements traversés par l'arbre 11 (non représentés dans un souci de clarté du dessin).

Dans l'exemple considéré, les ventilateurs 18 sont prévus pour aspirer l'air à l'intérieur de la machine et le rejeter par les sorties 24, et comportent à cet effet des pales 30 qui se rattachent à un moyeu 31 permettant leur fixation sur l'arbre 11.

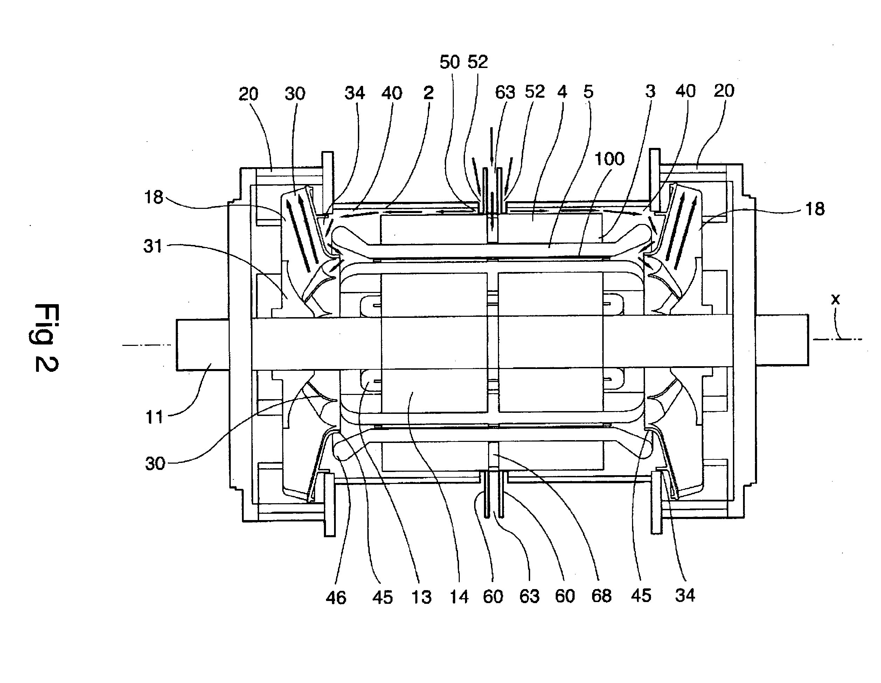

Chaque ventilateur 18 peut comporter, comme on le voit à la figure 2, une lèvre annulaire 34 qui ferme un espace 40 situé entre le carter 2 et le stator 3, et oblige l'air à contourner les têtes de bobines 46 du stator.

Chaque ventilateur 18 peut également comporter, dans l'exemple considéré, un voile annulaire 45 qui vient légèrement en recouvrement axial des têtes des bobines 46 du stator.

Au moins un canal 50 est formé entre le paquet de tôles statoriques 4 et le carter 2, pour la circulation de l'air de refroidissement depuis des ouies d'entrée d'air 52 formées dans le carter 2, par exemple sensiblement à mi-longueur de la machine, cette circulation s'effectuant sous l'effet de la dépression créée par les ventilateurs 18.

Les ouies 52 peuvent être réalisées par exemple par usinage du carter 2 et sont délimitées du côté d'un plan médian transversal de la machine par des collerettes respectives 60, lesquelles font saillie au-delà du carter 2.

Les collerettes 60 sont par exemple solidaires du paquet de tôles statoriques 4, étant par exemple soudées sur celui-ci.

Les collerettes 60 peuvent en variante être réalisées par une excroissance radiale d'une tôle se superposant au paquet de tôles statoriques.

Les collerettes 60 peuvent être parallèles entre elles et s'étendre perpendiculairement à l'axe de rotation X.

Le paquet de tôles statoriques 4 comporte, comme on peut le voir notamment à la figure 2, des passages 68 permettant à l'air entrant par la ou les entrées 63 existant entre les collerettes 60 de gagner l'entrefer 100 et le rotor 10.

En fonctionnement, les ventilateurs 18 sont entraînés en rotation et de l'air est aspiré à la fois par la ou les entrées 63 formées entre les collerettes et les ouies 52.

L'air aspiré par les ouies 52 circule entre le paquet de tôles statoriques 4 et le carter 2 jusqu'à l'espace 40 dans lequel sont situées les têtes de bobines 46, qu'il contourne en étant dévié par le voile 45, puis est aspiré par le canal du ventilateur situé entre le voile 45 et le moyeu 31.

L'air aspiré entre les collerettes 60 circule dans l'entrefer 100 et les canaux interpolaires 110 du rotor.

L'air sort en étant orienté radialement et obliquement en éloignement du plan médian transversal de la machine.

Bien entendu, l'invention n'est pas limitée à l'exemple de réalisation qui vient d'être décrit.

On peut notamment réaliser autrement les entrées d'air, les sorties d'air ou les ventilateurs.

Le paquet de tôles statoriques peut comporter des ailettes et/ou des canaux, disposées ou non en quinconce, afin d'accroître les échanges convectifs.

Les flasques peuvent avoir des formes particulières de type « volute » pour permettre d'obtenir de meilleures performances aérauliques de l'ensemble. De plus, afin d'éviter les recirculations du fluide de refroidissement entre les entrées et les sorties, les flasques peuvent être agencés de telle sorte que le flux d'air sortant soit orienté à l'opposé de la partie centrale, vers les extrémités.

Les collerettes 60 peuvent être réalisées avec une forme différente de celle illustrée, afin de minimiser une éventuelle recirculation de l'air entre les entrées et les sorties.

On peut remplacer les ventilateurs illustrés par des ventilateurs à double canal, permettant la séparation des flux d'air de refroidissement stator et rotor.

L'expression « comportant un » doit être comprise comme étant synonyme de « comportant au moins un », sauf si le contraire est spécifié.

## Revendications

1. Machine électrique tournante comportant un carter (2) logeant au moins partiellement un stator (3) et un rotor (10), ce carter comportant des entrées d'air et des sorties d'air, le rotor entraînant au moins deux ventilateurs (18) disposés de manière à créer une circulation d'air depuis les entrées d'air vers les sorties d'air, les ventilateurs (18) étant disposés de part et d'autre de la partie du rotor interagissant avec le stator, les sorties d'air (24) étant disposées de part et d'autre des entrées d'âir (52, 63), un premier flux d'air circulant entre un paquet de tôles du stator et le carter de la machine et un deuxième flux d'air circulant dans l'entrefer de la machine, les premier et deuxième flux d'air étant formés à partir d'entrées d'air respectives distinctes de la machine,
le stator comportant au moins un passage (68) à travers le paquet de tôles (4) du stator, ce ou ces passages (68) communiquant avec la ou les entrées d'air (63), de façon à permettre à l'air de gagner l'entrefer (100) de la machine,
l'air circulant dans l'entrefer (100) étant aspiré au travers d'au moins une entrée (63) formée entre deux collerettes (60).

2. Machine selon la revendication précédente, l'air circulant dans au moins un canal (50) ménagé entre le paquet de tôles (4) du stator et le carter.

3. Machine selon la revendication 1, le rotor comportant des canaux interpolaires (110) entre lesquels l'air ayant gagné l'entrefer peut circuler.

4. Machine selon l'une quelconque des revendications précédentes, les ventilateurs étant agencés pour amener l'air ayant circulé entre le paquet (4) de tôles statoriques et le carter (2) à rejoindre celui ayant circulé dans l'entrefer (100) avant de gagner les pales (30) des ventilateurs (18).

5. Machine selon la revendication précédente, les ventilateurs comportant chacun une première lèvre (34) fermant un espace (40) situé entre le ventilateur et le carter.

6. Machine selon l'une quelconque des revendications précédentes, chaque ventilateur comportant une lèvre (45) faisant saillie vers le ventilateur opposé et venant en recouvrement au moins partiel de têtes de bobines (46) du stator.

7. Machine selon l'une quelconque des revendications précédentes, les entrées d'air (52, 63) étant situées sensiblement à mi-distance des sorties d'air.

8. machine selon l'une quelconque des revendications précédentes, au moins une partie des entrées d'air (52) étant usinée dans le carter (2).

9. Machine selon l'une quelconque des revendications précédentes, le rotor étant bobiné.

10. Procédé de refroidissement d'une machine électrique telle que définie dans la revendication 1, dans lequel le refroidissement s'effectue en faisant circuler deux flux d'air entre les entrées d'air et les sorties d'air, le premier flux d'air circulant entre un paquet (4) de tôles du stator et le carter (2) de la machine et le deuxième flux d'air circulant à travers au moins un passage (68) du paquet de tôles du stator et dans l'entrefer (100) de la machine, les deux flux d'air circulant depuis une zone médiane de la machine vers ses extrémités, sous l'action des deux ventilateurs (18), les premier et deuxième flux d'air étant formés à partir d'entrées d'air respectives distinctes de la machine.

11. Procédé selon là revendication précédente, les premier et deuxième flux d'air se rejoignant avant leur éjection de la machine.

12. Procédé selon l'une des revendications 10 ou 11, le premier flux d'air étant amené à contourner des têtes de bobines du stator avant de rejoindre le deuxième flux d'air.

13. Procédé selon l'une quelconque des revendications 10 à 12, le deuxième flux d'air restant indépendant du premier.

## Patentansprüche

1. Elektrische Drehmaschine, umfassend ein Gehäuse (2), das zumindest teilweise einen Stator (3) und einen Rotor (10) aufnimmt, wobei das Gehäuse Lufteingänge und Luftausgänge aufweist, wobei der Rotor mindestens zwei Ventilatoren (18) betreibt, die so angeordnet sind, dass sie eine Luftströmung von den Lufteingängen aus zu den Luftausgängen hin erzeugen, wobei die Ventilatoren (18) auf beiden Seiten des Teils des Rotors angeordnet sind, der mit dem Stator interagiert, wobei die Luftausgänge (24) auf beiden Seiten der Lufteingänge (52, 63) angeordnet sind, wobei ein erster Luftstrom zwischen einem Blechkern des Stators und dem Gehäuse der Maschine zirkuliert und ein zweiter Luftstrom im Spalt der Maschine zirkuliert, wobei der erste und der zweite Luftstrom jeweils von verschiedenen Lufteingängen der Maschine aus gebildet werden,
wobei der Stator mindestens einen Durchgang (68) durch den Blechkern (4) des Stators aufweist, wobei der oder die Durchgänge (68) mit dem oder den Lufteingängen (63) kommunizieren, so dass sie der Luft ermöglichen, den Spalt (100) der Maschine zu erreichen,
wobei die im Spalt (100) zirkulierende Luft durch mindestens einen Eingang (63), der zwischen zwei Flanschen (60) gebildet ist, angesaugt wird.

2. Maschine nach dem vorhergehenden Anspruch, wobei die Luft in mindestens einem zwischen dem Blechkern (4) des Stators und dem Gehäuse vorgesehenen Kanal (50) zirkuliert.

3. Maschine nach Anspruch 1, wobei der Rotor zwischenpolige Kanäle (110) aufweist, zwischen denen die Luft zirkulieren kann, die den Spalt erreicht hat.

4. Maschine nach einem der vorhergehenden Ansprüche, wobei die Ventilatoren dazu eingerichtet sind, dass sie die Luft, die zwischen dem Blechkern (4) des Stators und dem Gehäuse (2) zirkuliert hat, mit der zusammenkommen lassen, die im Spalt (100) zirkuliert hat, bevor sie die Blätter (30) der Ventilatoren (18) erreicht hat.

5. Maschine nach dem vorhergehenden Anspruch, wobei die Ventilatoren jeweils eine erste Lippe (34) aufweisen, die einen Raum (40) abschließt, der zwischen dem Ventilator und dem Gehäuse liegt.

6. Maschine nach einem der vorhergehenden Ansprüche, wobei jeder Ventilator eine Lippe (45) aufweist, die zu einem gegenüberliegenden Ventilator hin herausragt und mindestens teilweise mit Enden der Windungen (46) des Stators überlappt.

7. Maschine nach einem der vorhergehenden Ansprüche, wobei die Lufteingänge (52, 63) im Wesentlichen auf halbem Wege der Luftausgänge angeordnet sind.

8. Maschine nach einem der vorhergehenden Ansprüche, wobei mindestens ein Teil der Lufteingänge (52) im Gehäuse (2) ausgebildet ist.

9. Maschine nach einem der vorhergehenden Ansprüche, wobei der Rotor gewickelt ist.

10. Verfahren zur Kühlung einer elektrischen Maschine nach Anspruch 1, in der die Kühlung bewirkt wird durch die Zirkulation zweier Luftströme zwischen den Lufteingängen und den Luftausgängen, wobei der erste Luftstrom zwischen einem Blechkern (4) des Stators und dem Gehäuse (2) der Maschine zirkuliert und der zweite Luftstrom durch mindestens einen Durchgang (68) im Blechkern des Stators und im Spalt (100) der Maschine zirkuliert, wobei die zwei Luftströme von einem mittleren Bereich der Maschine aus zu ihrem Äußeren zirkulieren, wobei der erste und der zweite Luftstrom durch den Betrieb zweier Ventilatoren (18) von jeweils verschiedenen Lufteingängen der Maschine aus gebildet werden.

11. Verfahren nach dem vorhergehenden Anspruch, wobei der erste und der zweite Luftstrom vor ihrem Austritt aus der Maschine zusammenkommen.

12. Verfahren nach einem der Ansprüche 10 oder 11, wobei der erste Luftstrom die Enden der Windungen des Stators umläuft, bevor er mit dem zweiten Luftstrom zusammenkommt.

13. Verfahren nach einem der Ansprüche 10 bis 12, wobei der zweite Luftstrom vom ersten unabhängig bleibt.

## Claims

1. A rotary electric machine comprising a casing (2) housing at least part of a stator (3) and a rotor (10), the casing comprising air inlets and air outlets, the rotor driving at least two fans (18) disposed so as to create a flow of air from the air inlets towards the air outlets, the fans (18) being disposed at opposite ends of the portion of the rotor that interacts with the stator, the air outlets (24) being disposed on either side of the air inlets (52, 63), a first stream of air flowing between a stack of stator laminations and the casing of the machine, and a second stream of air flowing in the airgap of the machine, the first an second flows of air being formed from respective distinct air inlets of the machine,
the stator comprising at least one passage (68) through the stack of stator laminations (4), said passage(s) (68) communicating with the air inlet(s) (63) so as to enable air to reach the airgap (100) of the machine,
the air flowing in the airgap (100) being sucked through at least one inlet (63) formed between two collars (60).

2. A machine according to claim 1, the air flowing in at least one channel (50) that is formed between the stack of stator laminations (4) and the casing.

3. A machine according to claim 1, the rotor having inter-pole channels (110) between which air that has reached the airgap can flow.

4. A machine according to any preceding claim, the fans being arranged to the air that has flowed between the stack of stator laminations (4) and the casing (2) to join the air that has flowed in the airgap (100) prior to reaching the blades (30) of the fans (18).

5. A machine according to the preceding claim, each fan comprising a first lip (34) closing a space (40) situated between the fan and the casing.

6. A machine according to any preceding claim, each fan comprising a lip (45) projecting towards the opposite fan and overlying the winding overhangs (46) of the stator, at least in part.

7. A machine according to any preceding claim, the air inlets (52, 63) being situated substantially halfway between the air outlets.

8. A machine according to any preceding claim, at least some of the air inlets (52) being machined in the casing (2).

9. A machine according to any preceding claim, the rotor being a wound rotor.

10. A method of cooling an electric machine, wherein cooling takes place by causing two streams of air to flow between air inlets and air outlets, the first air stream lowing between a stack (4) of stator laminations and the casing (2) of the machine, and the second air stream flowing along at least one passage (68) in the stack of stator laminations and in the airgap (100) of the machine, the two air streams flowing from a muddle zone of the machine towards its ends under the action of two fans (18), the first and second air streams being formed from respective distinct air inlets of the machine.

11. method according to claim 10, the first and second air streams joining each other prior to being ejected from the machine.

12. A method according to claim 10 or claim 11, the first air stream being caused to flow around the winding overhangs of the stator prior to joining the second air stream.

13. A method according to any one of claims 10 to 12, the second air stream remaining independent of the first.
